# EUROPEAN PATENT SPECIFICATION

(11) **EP 3 405 372 B1**
(45) Date of publication and mention of the grant of the patent: **11.12.2019**
(21) Application number: 16702649.1
(22) Date of filing: 21.01.2016
(51) Int. Cl.: B60T 17/04, F16L 37/256

(54) **INTERLOCKING GLADHANDS**
INEINANDERGREIFENDE KUPPLUNGSKÖPFE
TÊTES D'ACCOUPLEMENT À INTERVERROUILLAGE

(43) Date of publication of application: 28.11.2018
(73) Proprietor: New York Air Brake LLC, Watertown, NY 13601 (US)
(72) Inventor: AIKEN, Jeffrey, Watertown NY 13601 (US); ESTELLE, Taylor, Weedsport NY 13166 (US)
(74) Representative: Strehl Schübel-Hopf & Partner
(86) International application number: PCT/US2016/014267
(87) International publication number: WO 2017/127077

(56) References cited:
- FR-A- 1 456 861
- US-A- 1 797 423
- US-A- 2 535 740
- US-A- 3 241 865

## Description

### BACKGROUND OF THE INVENTION

### 1. FIELD OF THE INVENTION

The present invention relates to air brake hose connectors and, more particularly, to a connector having a mechanical interlock to prevent inadvertent decoupling.

### 2. DESCRIPTION OF THE RELATED ART

Air brake hose couplers, typically referred to as gladhand connectors, have two interlocking members fitted to the hoses that supply pressurized air from a locomotive to the railway air brakes of the railroad cars of a train and then coupled together to join the hoses together. Conventional gladhands used throughout in the rail industry do not include any mechanism that locks the gladhands together when in the coupled position. Instead, the prevailing gladhand design uses the compression of a rubber gasket between the faces of the two gladhands as the sole means to hold a rib in a groove, thus holding the gladhands together. This approach has proven to be unreliable in the field, however, as it is easily disconnected by involuntary forces, such as hose vibration. While the art includes locking mechanisms for gladhands, these approaches have not been adopted in the field because they require that the gladhand be unlocked through additional steps or manipulation that are not practical for current methods of rail car separation or compliant with the applicable industry regulations and standards, such as those promulgated by the Association of American Railroads (AAR). Thus, there is a need in the art for a gladhand design that mitigates the risk of unintended hose separation but allows for disconnection without additional steps or structure.

The document US 2 535 740 A discloses a gladhand coupling according to the preamble of claim 1. Further related art is disclosed in the documents FR 1 456 861 A, US 3 241 865 A and US 1 797 423 A.

### BRIEF SUMMARY OF THE INVENTION

The present invention comprises a gladhand coupling where each coupling half has a face with an opening therethrough, a locking lug extending outwardly from the face of said coupling half and having a first ramped pad positioned at a predetermined location about the face and a locking ridge, and a flange extending from the face and having a second ramped pad positioned oppositely about the face from the first ramped pad. The flange includes a leg defining a channel above the second ramped pad and has a locking groove. The channel is dimensioned to receive a locking lug of a second coupling half so that the locking ridge of the lug will mechanically engage the locking groove of flange. The first ramped pad comprises a conical portion and a ramped portion, and the second ramped pad comprises a corresponding conical portion and a ramped portion.

A second coupling half with the same structure may be positioned at approximately 180 to 200 degrees relative to the first coupling half for movement between a disconnected position, wherein the first coupling half and second coupling half are misaligned, and a connected position, wherein the first lug of first coupling half is held by the second flange of the second coupling half and the second lug of the second coupling half is held by the first flange of the first coupling half. A resilient gasket positioned between the two opposing faces of the coupling halves will provide sufficient outward biasing forces to keep the ridges and grooves in engagement during normal use and thus maintain the coupling in the connected position. In addition, when the coupling halves are in the connected position, the first and second ramped pads are in alignment and prevent unintended or unintentional lateral forces from compressing the two halves and thus overcoming the resiliency of a gasket so that the gladhand coupling disconnects prematurely. As a result, no special locking mechanisms are needed and the coupler can be disconnected by rotating and pulling the two coupling halves apart against the mechanical locking forces provided by the resilient gasket, ridge and groove.

### BRIEF DESCRIPTION OF THE SEVERAL VIEWS OF THE DRAWING(S)

The present invention will be more fully understood and appreciated by reading the following Detailed Description in conjunction with the accompanying drawings, in which:
FIG. 1 is a perspective view of a gladhand coupling according to the present invention;
FIG. 2 is a perspective view of a gladhand coupling half according to the present invention;
FIG. 3 is another perspective view of a gladhand coupling half according to the present invention;
FIG. 4 is front view of a gladhand coupling half according to the present invention;
FIG. 5 is an isometric view of a gladhand coupling half according to the present invention;
FIG. 6 is a perspective view of a gladhand coupling half according to the present invention; and
FIG. 7 is a perspective view of gladhand coupling half according to the present invention.

### DETAILED DESCRIPTION OF THE INVENTION

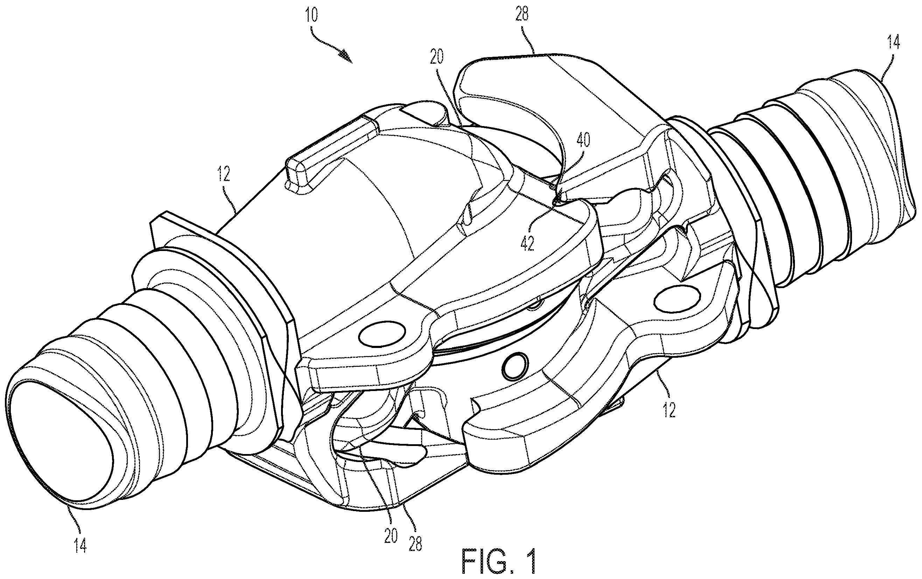

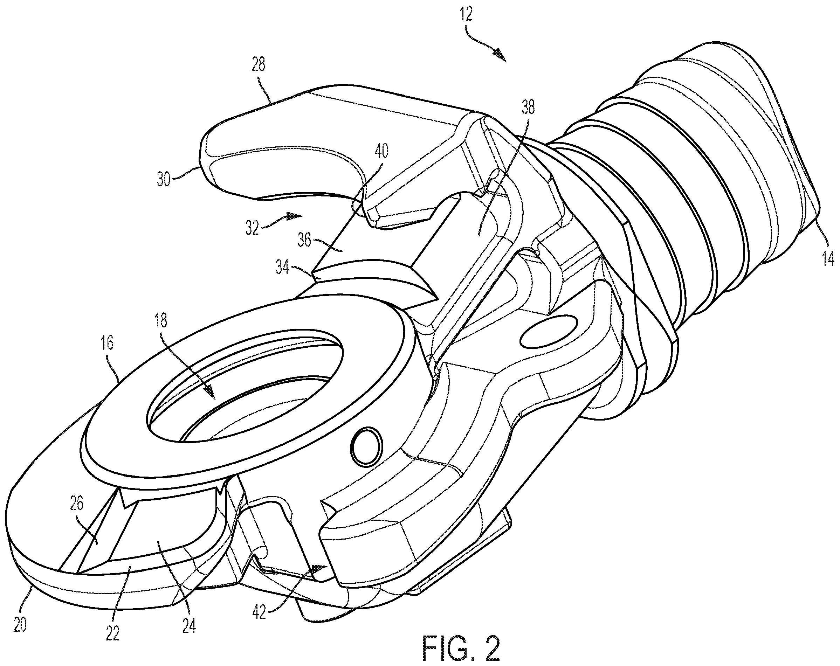

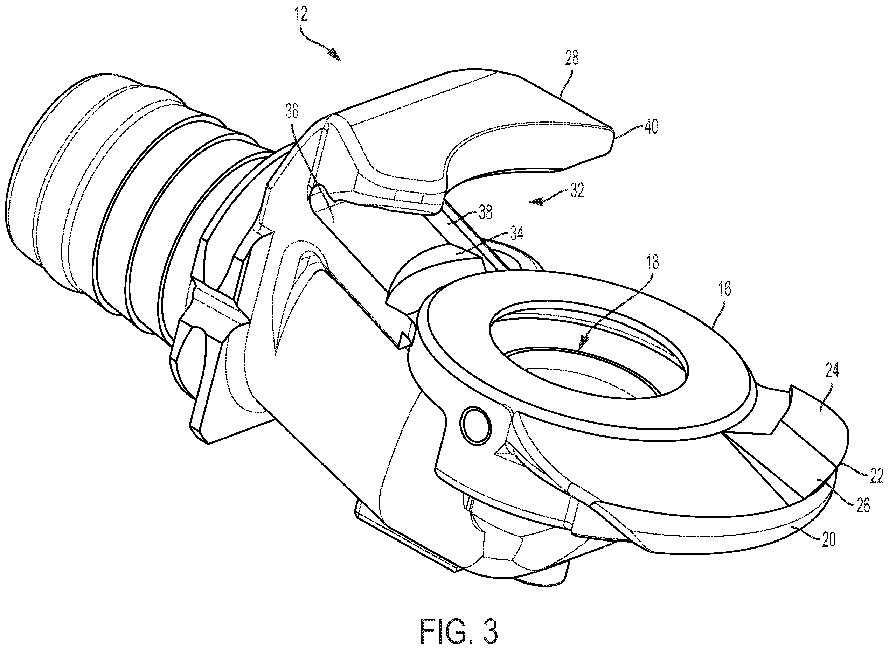

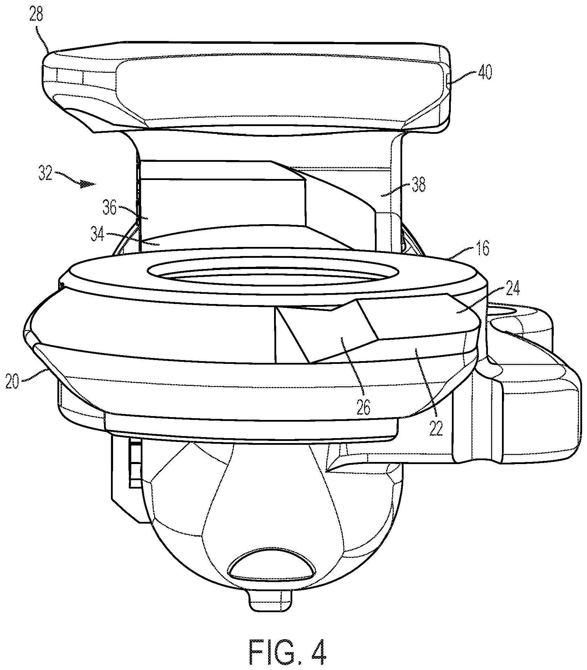

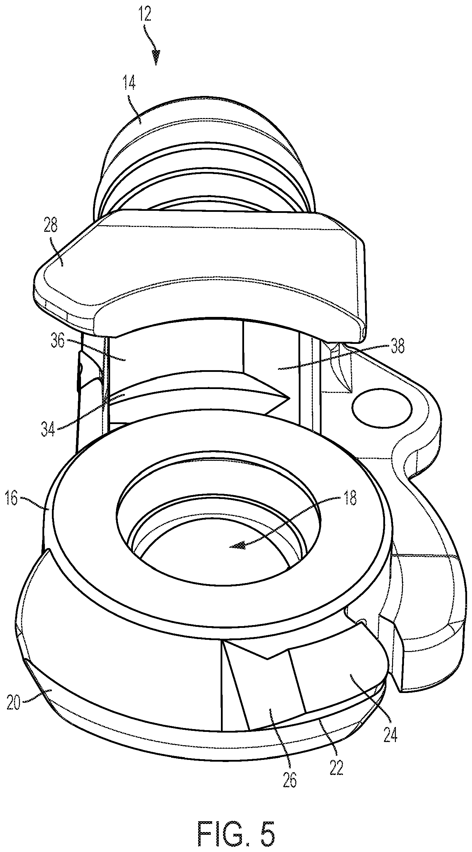

Referring now to the drawings, wherein like reference numerals refer to like parts throughout, there is seen in FIGS. 1 through 5, a gladhand coupling 10 comprising a pair of coupling halves 12 that may be rotatable coupled together. Each coupling half 12 includes an air hose shank 14 for the connecting an air hose (not shown) to coupling half 12. Referring to FIGS. 2 and 3, coupling half 12 is hollow and includes face 16 extending along a plane and having an opening 18 formed therethrough to define an air passage that is in fluid communication with the interior of connector 14 and thus the internal diameter of an air hose attached thereto. As with conventional gladhands, coupling 10 is connected and disconnected by rotating one coupling half 12 relative to another coupling half 12, thereby connecting and disconnecting the air hoses coupled to the shanks 14 of each coupling half 12. All of the elements of gladhand coupling 10 may be formed via metal casting when manufacturing coupling 10.

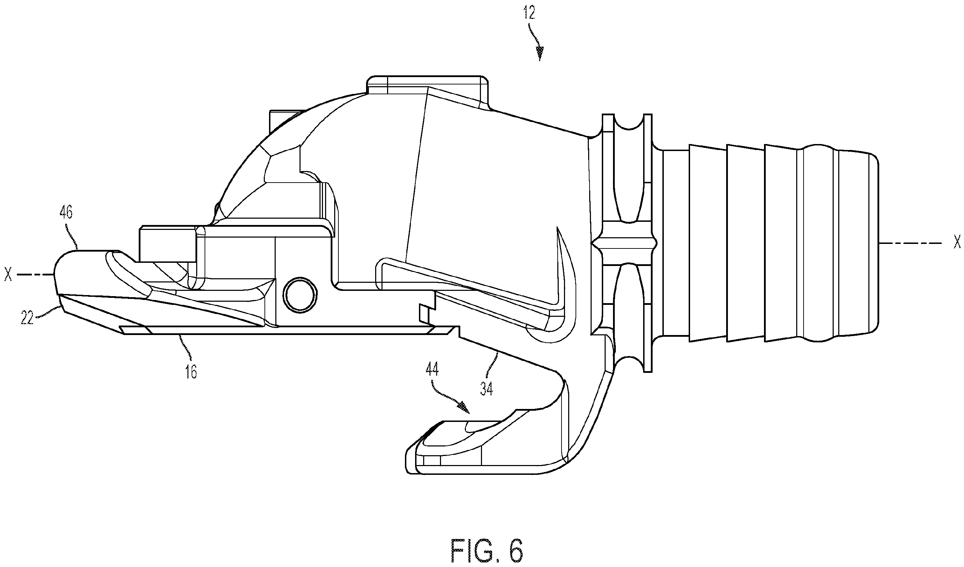

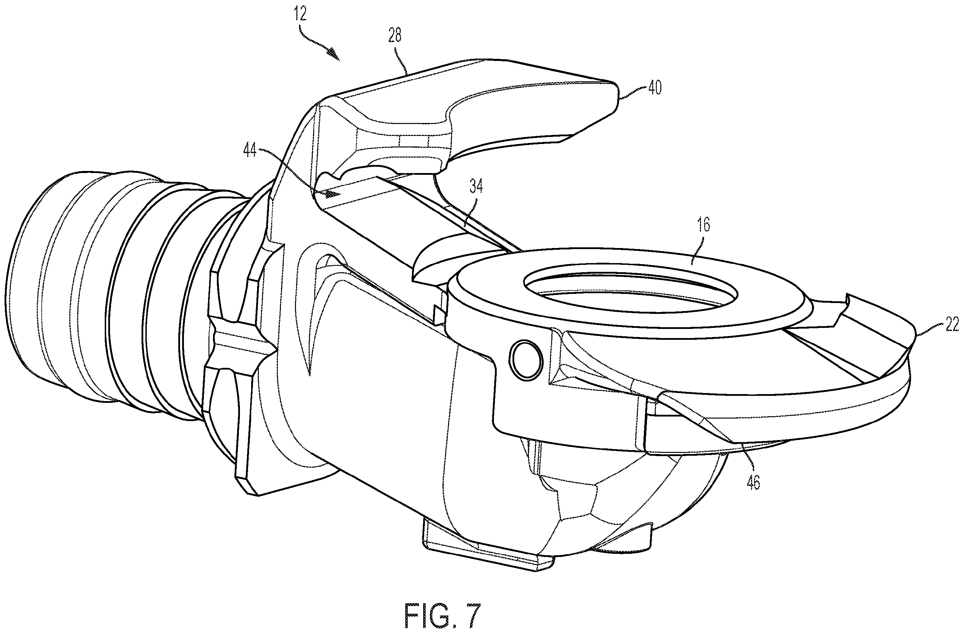

Referring to FIGS. 2 through 5, each coupling half 12 includes a locking lug 20 extending outwardly from the periphery of face 16 along a plane parallel to axis X-X. Lug 20 has a first ramped pad 22 defined by a conical portion 24, i.e., the surface of conical portion 24 extends conically relative to face 16, and a ramped surface 26 leading to conical portion 24 from the remaining surface of lug 20 that is conical relative to face 16. Coupling half 12 further includes an L-shaped annular flange 28 positioned approximately oppositely about face 16 of coupling half 12 from ramped pad 22 of lug 20. Flange 28 includes a pair of legs 30 that extends over face 16 to define a channel 32 that is adapted to receive a lug 20 of another coupling half 12. The lower portion of flange 28 includes a second ramped pad 34 having a conical portion 36 and a ramped portion 38 leading to conical portion 36 that correspond in positioning and conical angle to conical portion 24 and a ramped surface 26 of lug 20. Referring to FIGS. 6 and 7, conical portion 24 and conical portion 36 extend about face 16 of coupling half 12 at matching angles relative to longitudinal axis X-X of coupling half 12.

Each coupling half 12 further includes a pointed leg 40 on flange 28 and a notch 42 positioned at one end of lug 20 so that when two coupling halves 12 are connected together, leg 40 of flange is received in notch 42, thereby forming a stop that prevents rotations of coupling halves 12 past the locked position of gladhand coupling 10 seen in FIG. 1, where each coupling half 12 is positioned at less than 180 degrees relative to the other coupling half 12. Rotation of coupling halves 12 toward a 180 degree offset position allows coupling 10 to unlock as ramped pads 22 and 34 are no longer aligned opposite each other thereby allowing the resilient gasket to compress and coupling 10 to uncouple by pulling ridge 46 out of groove 44 when rail cars are separated normally.

As further seen in FIGS. 6 and 7, each coupling half 12 also includes an arcuate groove 44 formed in the interior surface of flange 28 and a corresponding arcuate ridge 46 formed on the exterior surface of lug 20. Ridge 46 and groove 44 are dimensioned and positioned so that ridge 46 of one coupling half 12 will slide into groove 44 of a mating coupling half 12 and continue sliding until the legs 40 of each half 12 engage the corresponding notches 42 of the other halves 12 as two coupling halves 12 are rotated toward the locked position. Ridge 46 is held in groove 44 by the opposing forces from the resilient gaskets seated in bore 18.

Coupling halves 12 are joined to form gladhand coupling 10 by positioning the respective faces 16 of two coupling halves 12 against each other so that the longitudinal axes are misaligned, and then rotating one coupling half 12 relative to the other coupling half 12 past a 180 degree orientation until lug 20 of one coupling half 12 slides completely into channel 32 of flange 28 of the other coupling half 12, ridge 46 slides fully into groove 44, and pointed leg engages notch 42. As halves 12 are rotated toward the locked position of FIG. 1, ridge 46 and groove 44 urge halves 12 together, thereby compressing any sealing gasket (not shown) that is positioned between the two halves 12. Because sealing gaskets are resilient, the biasing forces produced by the sealing gasket will help maintain gladhand coupling 10 in the locked position by keeping ridge 44 seated in groove 46.

Gladhand coupling 10 prevents inadvertent separation of halves 12 as follows. As coupling halves 12 are rotated into the locked position, sloped surfaces 26 and 38 guide flat surfaces 24 and 36 into opposing alignment despite any dimensional tolerances of the two coupling halves 12 and sealing gasket. Once gladhand coupling 10 is moved into the fully locked position of FIG. 1, surface 24 of one half 12 is directly opposite surface 36 of the opposing half 12 and spaced apart therefrom by an extremely minimal distance, such as between 0.00 inches and 0.06 inches thereby preventing coupling halves 12 from being compressed laterally enough that coupling halves 12 have the freedom to uncouple unintentionally. Due to the limited distance between these two surfaces, any inadvertent lateral forces applied to coupling 12 will be unable to compress the gasket positioned between the two halves 12 sufficiently to loosen coupling 10 such that ridge 44 of locking lug 20 of each half 12 is free to slide out of groove 44 of flange 28 of the other half 12. Rotational movement of coupling halves 12 will move flat surfaces 24 and 36 out of alignment so that coupling halves 12 can compress sealing gasket sufficiently to allow each ridge 44 of each locking lug 20 to slide out of each groove 44 of each flange 28. Alternatively, ramped pads 22 and 34 may be dimensioned and positioned to become mechanically coupled when coupling halves 12 are rotated together into the locked position of FIG. 1. This embodiment requires machining of surfaces 24 and 36 to be shallow ramps such that the highpoint created by the intersection of ramps 26 and 24, and the highpoint created by the intersection of ramps 36 and 38, need to be forced past each other to reach the fully locked position. The resulting mechanical interference between these two high points would help retain coupling 10 in the fully engaged position until they were forcefully pulled apart by the train in an intentional uncoupling event.

The intentional uncoupling of a gladhand coupling, including gladhand coupling 10, involves using the train to pull the brake hoses tight, which forces halves 12 to rotate toward 180 degree opposite alignment relative to each other. As halves 12 rotate, the opposing ramped pads 22 and 34 rotate out of alignment allowing the resilient gaskets to compress sufficiently to allow ridge 46 to be pulled out of groove 44 by the train car forces so that coupling halves 12 can separate. Gladhand coupling 10 thus remains free for normal disconnection of gladhand couplings by an intentional rotation of halves 12 relative to each other, such as during a rail yard pull-apart, but reduces the incidents of inadvertent disconnection when in locked position. As no additional latches or locking mechanisms need to be manipulated to unlock coupling halves 12, coupler 10 can be disconnected simply by rotating the two coupling halves 12 relative to each other as is the practice with conventional gladhands, or pulling them apart as described above, thereby providing for a secure mechanical interconnection without the need for complex locking structure that must be separately unlocked before gladhand coupling 10 can be open to disconnect air hoses connected thereto.

## Claims

1. A gladhand coupling (10), comprising:
a coupling half (12) having a face (16) with an opening (18) therethrough;
a locking lug (20) extending outwardly from the face (16) of said coupling half (12) and having a first ramped pad (22) positioned at a predetermined location about the face (16) and a ridge (46) extending outwardly therefrom;
**characterized by** further comprising
a flange (28) extending from the face (16) and having a second ramped pad (34) positioned oppositely about the face (16) from the first ramped pad (22) and a groove (44) formed therein that corresponds to the ridge (46) of the locking lug (20).

2. The coupling of claim 1, wherein the flange (28) includes a leg (40) defining a channel (32) above the second ramped pad (34).

3. The coupling of claim 2, wherein the channel (32) is dimensioned to receive a locking lug (20) of a second coupling half (12).

4. The coupling of claim 3, wherein the first ramped pad (22) comprises a conical portion (24) and a ramped portion (26).

5. The coupling of claim 4, wherein the second ramped pad (34) comprises a second conical portion (36) and a second ramped portion (38).

6. The coupling of claim 5, further comprising:
a second coupling half (12) having a second face (16) with a second opening therethrough;
a second locking lug (20) extending outwardly from the second face (16) of said second coupling half (12) and having a third ramped pad (22) positioned at a predetermined location about the second face (16) and a second ridge (46) extending therefrom;
a second flange (28) extending from the second face (16) and having a fourth ramped pad (34) positioned oppositely about the second face (16) from the third ramped (22) pad and a second groove (44) extending therefrom.

7. The coupling of claim 6, wherein the first coupling half (12) and second coupling half (12) are movable between a disconnected position, wherein the first and fourth ramped pads (22, 34) are misaligned and the second and third ramped pads (22, 34) are misaligned, and a connected position, wherein the first and fourth ramped pads (22, 34) are aligned and the second and third ramped pads (22, 34) are aligned.

8. The coupling of claim 7, wherein the first and fourth ramped pads (22, 34) are spaced apart less than 0.06 inches when the coupling is in the connected position.

9. The coupling of claim 8, wherein the second and third ramped pads (22, 34) are spaced apart less than 0.06 inches when the coupling is in the connected position.

10. The coupling of claim 9, wherein the first coupling half (12) and second coupling half (12) are oriented at less than 180 degrees to each other when in the locked position.

## Patentansprüche

1. Kupplung mit ineinandergreifenden Kupplungsköpfen (10), umfassend:
eine Kupplungshälfte (12) mit einer Fläche (16) mit einer durchgehenden Öffnung (18);
eine Verriegelungslasche (20), die sich von der Fläche (16) der Kupplungshälfte (12) nach außen erstreckt und einen ersten rampenförmigen Block (22) aufweist, das an einer vorbestimmten Stelle neben der Fläche (16) angeordnet ist, und einen sich von dort nach außen erstreckenden Grat (46);
**dadurch gekennzeichnet, dass** sie ferner umfasst:
einen Flansch (28), der von der Fläche (16) ausgeht und einen zweiten rampenförmigen Block (34) aufweist, der bezogen auf die Fläche (16) dem ersten rampenförmigen Block (22) gegenüber liegend angeordnet ist, und eine darin ausgebildete Nut (44), die dem Grat (46) der Verriegelungslasche (20) entspricht.

2. Kupplung nach Anspruch 1, wobei der Flansch (28) einen Schenkel (40) umfasst, der einen Kanal (32) über dem zweiten rampenförmigen Block (34) definiert.

3. Kupplung nach Anspruch 2, wobei der Kanal (32) so bemessen ist, dass er eine Verriegelungslasche (20) einer zweiten Kupplungshälfte (12) aufnimmt.

4. Kupplung nach Anspruch 3, wobei der erste rampenförmige Block (22) einen konischen Abschnitt (24) und einen rampenförmigen Abschnitt (26) umfasst.

5. Kupplung nach Anspruch 4, wobei der zweite rampenförmige Block (34) einen zweiten konischen Abschnitt (36) und einen zweiten rampenförmigen Abschnitt (38) umfasst.

6. Die Kupplung nach Anspruch 5, ferner umfassend:
eine zweite Kupplungshälfte (12) mit einer zweiten Fläche (16) mit einer zweiten durchgehenden Öffnung;
eine zweite Verriegelungslasche (20), die sich von der zweiten Fläche (16) der zweiten Kupplungshälfte (12) nach außen erstreckt und einen dritten rampenförmigen Block (22) aufweist, der an einer vorgegebenen Stelle neben der zweiten Fläche (16) angeordnet ist, und einen zweiten Grat (46), der sich daran anschließt;
einen zweiten Flansch (28), der sich an die zweite Fläche (16) anschließt und einen vierten rampenförmigen Block (34) aufweist, der bezogen auf die zweite Fläche (16) dem dritten rampenförmigen Block (22) gegenüber liegend angeordnet ist, und eine zweiten Nut (44), die sich daran anschließt.

7. Die Kupplung nach Anspruch 6, wobei die erste Kupplungshälfte (12) und die zweite Kupplungshälfte (12) zwischen einer getrennten Konfiguration, in der die ersten und vierten rampenförmigen Blöcke (22, 34) nicht zueinander ausgerichtet sind und die zweiten und dritten rampenförmigen Blöcke (22, 34) nicht zueinander ausgerichtet sind, und eine verbundene Konfiguration, wobei die ersten und vierten Rampenpads (22, 34) zueinander ausgerichtet sind und die zweiten und dritten Rampenpads (22, 34) zueinander ausgerichtet sind.

8. Kupplung nach Anspruch 7, wobei die ersten und vierten rampenförmigen Blöcke (22, 34) weniger als 0,06 Zoll voneinander beabstandet sind, wenn sich die Kupplung in der verbundenen Konfiguration befindet.

9. Kupplung nach Anspruch 8, wobei die zweiten und dritten rampenförmigen Block (22, 34) weniger als 0,06 Zoll voneinander beabstandet sind, wenn sich die Kupplung in der verbundenen Konfiguration befindet.

10. Kupplung nach Anspruch 9, wobei die erste Kupplungshälfte (12) und die zweite Kupplungshälfte (12) in der verriegelten Konfiguratoin in weniger als 180 Grad zueinander ausgerichtet sind.

## Revendications

1. Accouplement (10) par têtes d'accouplement, comprenant :
une moitié (12) d'accouplement ayant une face (16) avec une ouverture (18) à travers celle-ci ;
un tenon de verrouillage (20) s'étendant vers l'extérieur depuis la face (16) de ladite moitié (12) d'accouplement et ayant un premier tampon incliné (22) positionné en un emplacement prédéterminé autour de la face (16) et une crête (46) s'étendant vers l'extérieur depuis celui-ci ;
**caractérisé en ce que** comprenant en outre
un rebord (28) s'étendant depuis la face (16) et ayant un deuxième tampon incliné (34) positionné de façon opposée autour de la face (16) par rapport au premier tampon incliné (22) et une rainure (44) formée dans celui-ci qui correspond à la crête (46) du tenon de verrouillage (20).

2. Accouplement selon la revendication 1, dans lequel le rebord (28) inclut une patte (40) définissant un canal (32) au-dessus du deuxième tampon incliné (34).

3. Accouplement selon la revendication 2, dans lequel le canal (32) est dimensionné pour recevoir un tenon de verrouillage (20) d'une deuxième moitié (12) d'accouplement.

4. Accouplement selon la revendication 3, dans lequel le premier tampon incliné (22) comprend une partie conique (24) et une partie inclinée (26).

5. Accouplement selon la revendication 4, dans lequel le deuxième tampon incliné (34) comprend une deuxième partie conique (36) et une deuxième partie inclinée (38).

6. Accouplement selon la revendication 5, comprenant en outre :
une deuxième moitié (12) d'accouplement ayant une deuxième face (16) avec une deuxième ouverture à travers celle-ci ;
un deuxième tenon de verrouillage (20) s'étendant vers l'extérieur depuis la deuxième face (16) de ladite deuxième moitié (12) d'accouplement et ayant un troisième tampon incliné (22) positionné en un emplacement prédéterminé autour de la deuxième face (16) et une deuxième crête (46) s'étendant vers l'extérieur depuis celui-ci ;
un deuxième rebord (28) s'étendant depuis la deuxième face (16) et ayant un quatrième tampon incliné (34) positionné de façon opposée autour de la deuxième face (16) par rapport au troisième tampon incliné (22) et une deuxième rainure (44) s'étendant depuis celui-ci.

7. Accouplement selon la revendication 6, dans lequel la première moitié (12) d'accouplement et la deuxième moitié (12) d'accouplement sont mobiles entre une position déconnectée, dans laquelle les premier et quatrième tampons inclinés (22, 34) sont désalignés et les deuxième et troisième tampons inclinés (22, 34) sont désalignés, et une position connectée, dans laquelle les premier et quatrième tampons inclinés (22, 34) sont alignés et les deuxième et troisième tampons inclinés (22, 34) sont alignés.

8. Accouplement selon la revendication 7, dans lequel les premier et quatrième tampons inclinés (22, 34) sont espacés de moins de 0,06 pouce lorsque l'accouplement est dans la position connectée.

9. Accouplement selon la revendication 8, dans lequel les deuxième et troisième tampons inclinés (22, 34) sont espacés de moins de 0,06 pouce lorsque l'accouplement est dans la position connectée.

10. Accouplement selon la revendication 9, dans lequel la première moitié (12) d'accouplement et la deuxième moitié (12) d'accouplement sont orientées à moins de 180 degrés l'une par rapport à l'autre lorsqu'elles sont dans la position verrouillée.
